# EUROPEAN PATENT APPLICATION

(11) **EP 0 876 751 A1**
(43) Date of publication of application: **11.11.1998**
(21) Application number: 98201035.7
(22) Date of filing: 01.04.1998
(51) Int. Cl.: A01D 78/10

(54) **An implement for displacing crop lying on the soil**

(30) Priority: 08.04.1997 NL 1005753; 22.05.1997 NL 1006116
(71) Applicant: MAASLAND N.V., 3155 PD Maasland (NL)
(72) Inventor: van den Engel, Alfonsus Jacobus, 3123 CM Schiedam (NL)
(74) Representative: Mulder, Herman

(57) **Abstract**

The invention relates to an implement for displacing crop lying on the soil, comprising a frame and at least two rake members (2) which are each suitable to be driven about respective, spaced-apart axes of rotation (7), each rake member (2) being provided with a number of rake tines (5) which are pivotable about a respective axis of rotation, while at least one rake member is provided with a support carrying the rake member during operation. The implement further comprises hinging means (13) with the aid of which one rake member can be folded up on top of the other.

## Description

The invention relates to an implement for displacing crop lying on the soil, comprising a frame and at least two rake members which are each suitable to be driven about respective, spaced-apart axes of rotation, each rake member being provided with a number of rake tines which are pivotable about a respective axis of rotation at a distance, while at least one rake member is provided with a support carrying the rake member during operation.

Such an implement is known.

The known implement comprises two or more rake members which are fastened to a frame, said frame comprising coupling means with the aid of which the implement can be coupled to a tractor. For the purpose of bringing the implement into the transport position, the frame including the rake wheels is pivoted about a vertical axis into a position in which it is located straight behind the tractor. Because of the fact that in the transport position the rake wheels are located one behind the other, the above-described implement has the disadvantage of having a relatively long transport length. Furthermore, for being suitable for pivoting from the operative position into the transport position, the implement comprises a relatively complex construction.

The present invention has for its object to improve the above-mentioned implement in such a manner that the above-described drawbacks do not occur or are at least reduced to a minimum.

In accordance with the invention this is achieved in that the implement comprises hinging means with the aid of which one rake member can be folded up on top of the other.

According to an inventive feature, during transport, the axis of rotation of one rake member and the axis of rotation of the other rake member in the folded-up position are at least in alignment, parallel to each other or one on top of the other.

According to another feature of the invention, at least one rake member is provided with a support carrying the rake member during transport.

According to again another inventive feature, the drive of the rake members comprises hinging means enabling to drive the rake members from the power take-off shaft of the tractor both during operation and in the folded-up position. When, during folding up, the tractor driver forgets to switch off the drive of the power take-off shaft, the hinging means prevent the drive of the rake wheels from being damaged. In a preferred embodiment, the hinging means comprise two interconnected universal joints which are also designated by the man skilled in the art as a double universal joint.

According to a further aspect of the invention, the implement comprises first adjusting means with the aid of which the distance between two immediately adjacent rake members is adjustable. By adjusting the distance between the rake members it is possible to adapt the implement to the amount of material to be raked. According to an inventive feature, the implement further comprises height-adjusting means with the aid of which at least one rake member is adjustable in height. With the height-adjusting means the tines of the rake members can be adjusted at the proper height relative to the crop lying on the soil. The height-adjusting means further enable to lift the rake tines during transport sufficiently far from the ground so that they do not come into contact with the soil during transport. In an embodiment in accordance with the invention, the height-adjusting means of the relevant rake member comprise an at least two-axled wheel set, the arrangement being such that the distance between the wheel axles is adjustable via a hinging construction that is connected with said rake member, and that a change in the distance between these axles results in a change in height of the rake member. According to an inventive feature, the implement comprises switch means with the aid of which the direction of rotation between immediately adjacent rake members is adjustable. Due to the fact that the direction of rotation is adjustable, the machine is suitable both for raking and tedding of crop that is lying on the soil. Furthermore, by changing the direction of rotation it is possible to choose between a side delivery rake and a centre delivery rake. With a side delivery rake the crop is displaced by the two rake members in the same direction until the lateral side of the machine, whereas with a centre delivery rake the crop is deposited between the two rake members. With the aid of the above-mentioned adjusting means it is also possible to deposit a swath between the two rake members and to deposit a swath near the outer rake member.

In accordance with again another inventive feature, the implement comprises angle-adjusting means with the aid of which the position of one rake member relative to the other is adjustable, so that the straight line connecting the mutual axes of rotation is suitable for assuming different angles relative to the usual direction of travel A. This makes is possible to arrange the rake members both next to each other and obliquely behind each other, which enables e.g. to switch the machine over from raking to tedding.

According to a still further inventive feature, one rake member of a set of rake members, suitable for being folded up one on top of the other, can be coupled via a frame arm to a tractor, preferably so as to be non-pivotable in the horizontal plane, whereas the other rake member of that set is coupled to the former rake member via a further frame arm. In this manner, on the one hand, a compact and/or simple structure of the implement is possible and, on the other hand, the implement can be brought into the transport position without substantial adjustments being required. In the transport position, the wheel set of the lower rake member functions as transport wheels for the entire implement.

According to again another inventive feature, there are provided further hinging means, so that at least one group of rake members that are suitable for being folded up one on top of the other is pivotable as a whole, e.g. forwards or rearwards relative to the direction of travel, for the purpose of being brought into the transport position. In this manner the width in the transport position can be limited. According to still another inventive feature, there are disposed hinging means for two or more of those groups of rake members, so that one group of rake members can be pivoted forwards and the other group of rake members can be pivoted rearwards simultaneously about a common, upwardly orientated axis which is located therebetween.

For a better understanding of the invention, reference will now be made to the accompanying drawings, in which:
Figure 1 is a plan view of a first embodiment of the implement according to the invention, in a first operative position;
Figure 2 is a side view according to the arrow II in Figure 1;
Figure 3 is a view according to Figure 1, in a second operative position;
Figure 4 is a plan view of a second embodiment of the implement according to the invention, in an operative position;
Figure 5 is a rear view of the implement shown in Figure 4, and
Figure 6 is a view according to Figure 4, showing the implement in the transport position.

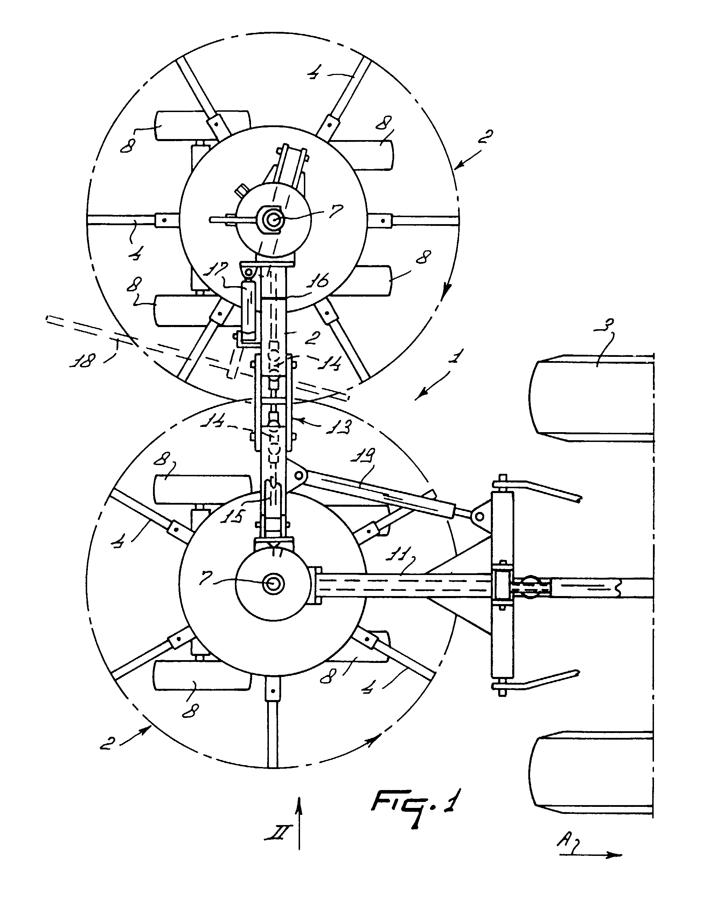

Figure 1 shows an implement 1 comprising two rake members 2 which are coupled by means of a frame to a tractor 3 of which only the rear side is shown schematically. The usual direction of travel is indicated by the arrow A. Each rake member 2 comprises radial tine arms 4 from which rake tines 5 extend approximately vertically towards the ground 6. On each tine arm 4 there are disposed, in radial direction with intervals, a number of rake tines 5, e.g. four or six. Each tine arm 4 is suitable for rotating in a customary manner about its longitudinal axis, so that the respective rake tines 5 are moved from their substantially vertical position into an oblique position, and are moved with their free ends from the ground 6, for the purpose of retracting from the crop and throwing it away. To that end there is provided a non-shown control device which is known per se. Each rake member 2 is rotatable about a respective axis of rotation 7. This axis of rotation preferably extends vertically as is usual with this type of implement. Each rake member 2 is carried by a respective two-axled support provided with four running wheels 8. The supports comprise height-adjusting means with the aid of which the rake members 2 are adjustable in height. Each of the height-adjusting means comprises a hinging construction 9 that is connected with the wheel axles of the respective rake member 2. The distance between the two axles of a support is adjustable by means of a hydraulic or pneumatic cylinder 10. It is also possible to apply for this purpose a screw adjustment with e.g. a worm wheel. By lengthening or shortening the distance between the two axles about which rotate the respective running wheels 8, the height of the tine arms 4 relative to the ground 6 can be adjusted. In this manner, e.g. for adjusting the transport position, the distance between the two axles can be adjusted such that the tine arms 4 are sufficiently moved upwards in order to obtain a sufficient clearance between the free ends of the rake tines 5 and the ground 6.

One of the two rake members 2 is coupled to the rear side of the tractor 3 by means of a frame beam 11 extending substantially parallel to the usual direction of travel (arrow A). Said frame beam 11 is fastened to the tractor and the rake member so as to be non-pivotable in the horizontal plane.

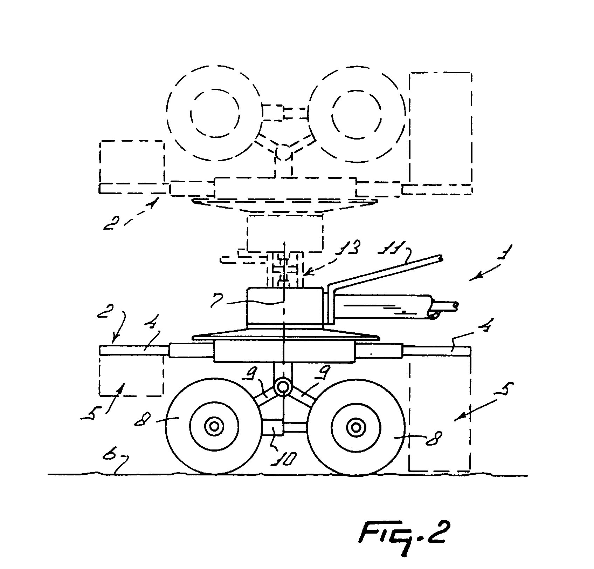

A further frame beam 12 extends between the two rake members 2. In order to make it possible for one rake member 2 to be folded up on top of the other rake member 2 (as indicated by dashed lines in Figure 2), the implement is provided with hinging means 13. The latter comprise two spaced-apart hinges having axes that extend substantially horizontally. The drive shaft extending through the frame beam 12 has two spaced-apart, hinged transmissions, such as universal joints 14, whose axes substantially coincide with those of the hinging means 13. In this manner it is possible for the drive to be switched on in any folded-up position, without damage occurring to the drive. Folding up and folding out may e.g. take place by means of a pneumatic or hydraulic cylinder 15 whose position is only indicated schematically. To the man skilled in the art it will be obvious how folding up and folding out are realized in practice.

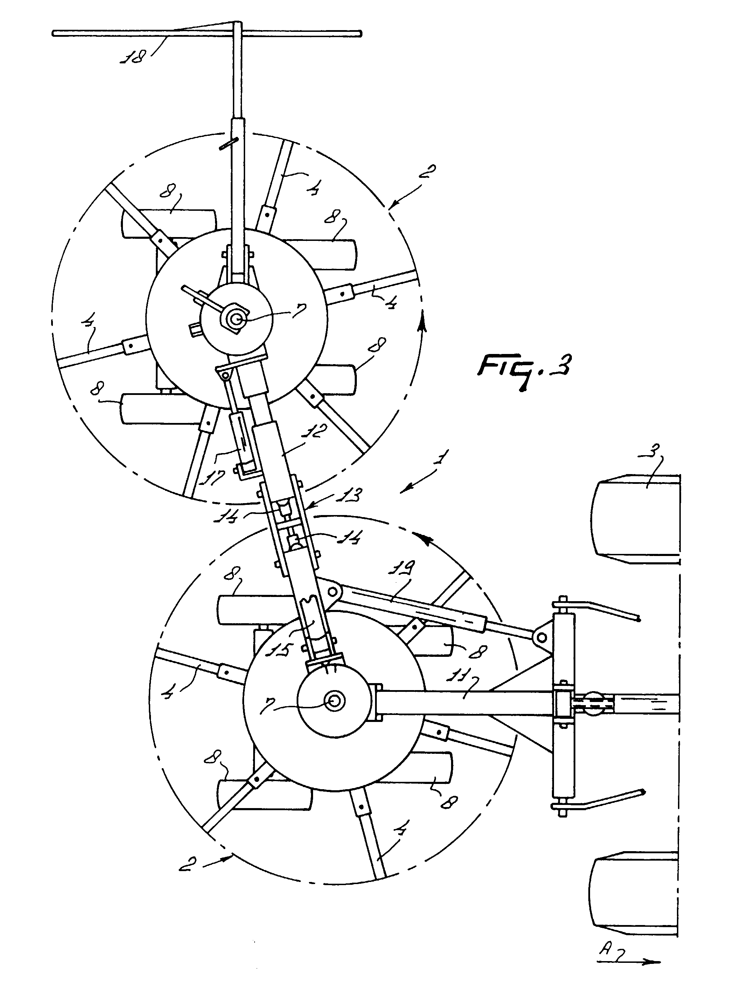

The implement is further provided with adjusting means 17 with the aid of which the distance between the two rake members 2 can be adjusted. To that end the frame beam 12 is designed so as to be extendable at the place indicated in Figure 1 by reference numeral 16. Lengthening or shortening takes place with the aid of an adjusting member 17, such as e.g. a pneumatic or hydraulic cylinder. It is also possible to apply a screw adjustment with a worm wheel instead of a cylinder. A so-called swath board may be disposed on the frame beam 12 at a suitable place between the two rake members 2. Figure 3 shows a side swath board 18 which is suitable for being folded up and which is disposed on the outer rake member 2. Figure 1 shows this swath board 18 in its folded-up position on top of the outer rake member 2.

The implement is furthermore provided with angle-adjusting means with the aid of which the position of one rake member 2 relative to the other rake member 2 is adjustable in the horizontal plane.

When comparing Figures 1 and 3, it will be clear that with the aid of the adjusting member 19 pertaining to the adjusting means, which adjusting member 19 is constituted in this case by a hydraulic or pneumatic cylinder, the two rake members 2 can be arranged immediately next to each other (Figure 1), or obliquely behind each other (Figure 3).

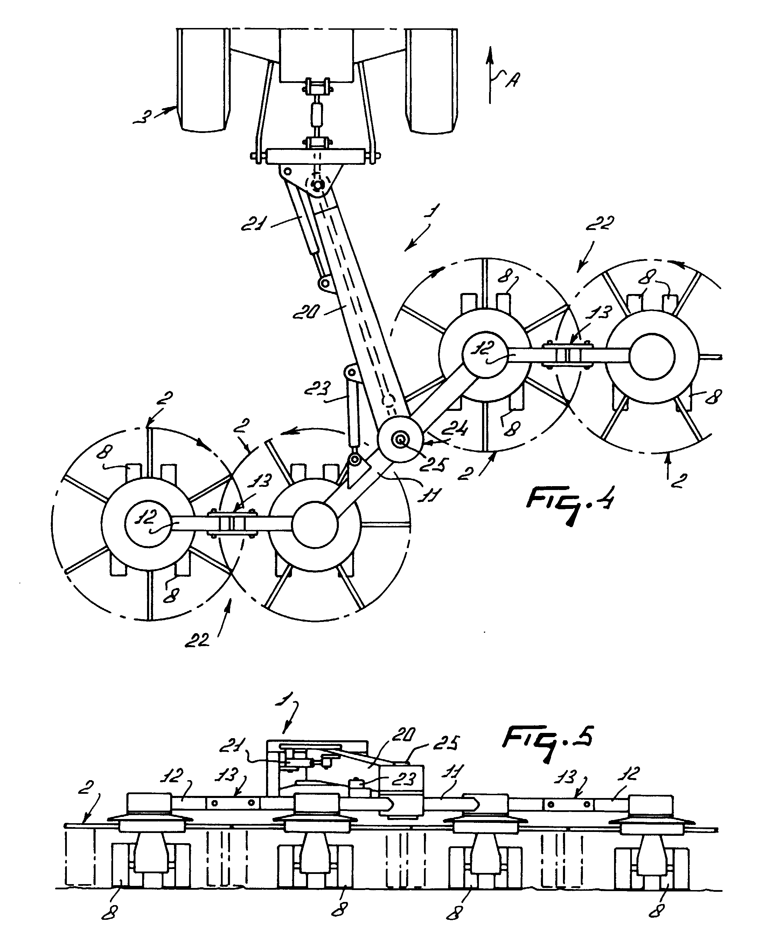

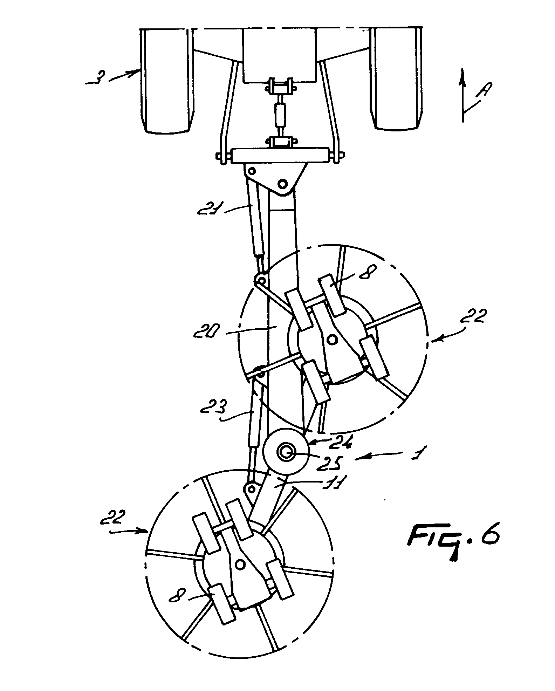

Figures 4 to 6 show an alternative provided with four rake members 2. Parts corresponding as regards function and/or design to those of the implement according to Figures 1 to 3, are indicated by the same reference numerals. A main frame beam 20 comprises at one end hinging means with the aid of which the implement is connected with the tractor 3 so as to be pivotable in the horizontal plane. The angle which the main frame beam 20 assumes relative to the tractor 3 is adjustable with the aid of adjusting means 21, in this case constituted by a hydraulic piston/cylinder combination. At its other end the main frame beam 20 comprises further hinging means 24 disposed about an axis 25, by means of which hinging means 24 a frame arm is connected with the end of the main frame beam so as to be pivotable in the horizontal plane. The pivot position of the frame arm 11 is adjustable with the aid of adjusting means 23, in this case constituted by a hydraulic piston/cylinder combination. At each end of the frame arm 11 there is located a group 22 of two rake members 2 provided with running wheels 8. As shown in the embodiment according to Figures 1 to 3, the rake members 2 of each group 22 are interconnected so as to be suitable to be driven and being folded up one on top of the other, and are also provided for that purpose with hinging means 13 and transmissions 14. Furthermore, like in the first embodiment, the length of the frame arm 12 is adjustable at the (non-shown) place 16. Also in this situation folding up takes place by means of the (non-shown) hydraulic piston/cylinder combination 15 or an other adjusting means. The position of the frame arm 12 in the operative position (Figure 4) relative to the pivot arm 11 is fixed in this embodiment, but may also be adjustable, as shown in the embodiment according to Figures 1 to 3. For this purpose, an adjusting member 19 has to be provided between the arms 11 and 12. Also in this situation the drive shafts extend from the power take-off shaft of the tractor 3 through the arms 11, 12 and 20. When the implement 1 is used as a rake, then (non-shown) swath boards 18, like in the embodiment of Figures 1 to 3, may be provided in order to be arranged between the rake members 2 of a group of rake members 22 or at a lateral side of such a group 22. Figure 6 shows how out of each group of rake members 22 one rake member 2 is folded up on top of the other one, one group of rake members 22 having been pivoted forwards and the other group 22 having been pivoted rearwards along with the frame arm 11, and the main frame beam 20 having been brought into a position in which it extends more parallel to the longitudinal centre line of the tractor 3. In the transport position, the running wheels 8 (non visible in Figure 6) of the non-folded up rake member of each group of rake members bear on the ground. The running wheels 8 of the rake members 2 are pivotable about an upwardly orientated axis.

## Claims

1. An implement for displacing crop lying on the soil, comprising a frame and at least two rake members (2) which are each suitable to be driven about respective, spaced-apart axes of rotation (7), each rake member (2) being provided with a number of rake tines (5) which are pivotable about a respective axis of rotation at a distance, while at least one rake member (2) is provided with a support carrying the rake member during operation, characterized in that the implement comprises hinging means (13) with the aid of which one rake member (2) can be folded up on top of the other.

2. An implement as claimed in claim 1, characterized in that at least one rake member (2) maintains the same position both during transport and during operation relative to the direction of travel, seen in top view.

3. An implement as claimed in any one of the preceding claims, characterized in that, during transport, the axis of rotation of one rake member and the axis of rotation of the other rake member in the folded-up position are at least in alignment, parallel to each other or one on top of the other.

4. An implement as claimed in any one of the preceding claims, characterized in that the drive of the rake members comprises hinging means (13), located between two rake members suitable for being folded up one on top of the other, enabling to drive the rake members from the power take-off shaft of the tractor (3) both during operation and in the folded-up position.

5. An implement as claimed in claim 4, characterized in that the hinging means (13) in the drive comprise two interconnected universal joints (14).

6. An implement as claimed in any one of the preceding claims, characterized in that the implement comprises first adjusting means (17) with the aid of which the distance between two immediately adjacent rake members (2) is adjustable.

7. An implement as claimed in any one of the preceding claims, characterized in that the implement comprises height-adjusting means with the aid of which at least one of the rake members (2) is adjustable in height.

8. An implement as claimed in claim 7, characterized in that the height-adjusting means of the relevant rake member (2) comprise an at least two-axled wheel set, the arrangement being such that the distance between the wheel axles is adjustable via a hinging construction (9) that is connected with said rake member (2), and that a change in the distance between these axles results in a change in height of said rake member (2).

9. An implement as claimed in any one of the preceding claims, characterized in that the implement comprises switch means with the aid of which the direction of rotation between immediately adjacent rake members (2) is adjustable.

10. An implement as claimed in any one of the preceding claims, characterized in that adjacent rake members (2) have the same direction of rotation.

11. An implement as claimed in any one of the preceding claims, characterized in that the implement comprises angle-adjusting means with the aid of which the position of one rake member (2) relative to the other is adjustable, so that the straight line connecting the mutual axes of rotation (7) is suitable for assuming different angles relative to the usual direction of travel (A).

12. An implement as claimed in any one of the preceding claims, characterized in that a rake member is suitable for being coupled to a tractor (3) via a frame arm (11), and that a further rake member is coupled to the former rake member (2) via another frame arm (12).

13. An implement as claimed in claim 12, characterized in that the frame arm (11) is suitable for being coupled to the tractor so as to be non-pivotable in the horizontal plane.

14. An implement as claimed in any one of the preceding claims, characterized in that there are provided further hinging means (24) with the aid of which two rake members, which are suitable for being folded up one on top of the other, are pivotable collectively or individually forwardly and/or rearwardly, viewed in the direction of travel of the implement, about an upwardly orientated axis (25).

15. An implement as claimed in any one of the preceding claims, characterized in that to an end of a main frame beam (20), on both sides thereof, at least one group (22) of rake members (2) is coupled, which rake members (2) are suitable for being folded up one on top of the other.

16. An implement as claimed in any one of the preceding claims, characterized in that each rake member (2) is provided with one or more running wheels (8).
